# EUROPÄISCHE PATENTSCHRIFT

(11) **EP 2 198 692 B1**
(45) Veröffentlichungstag und Bekanntmachung des Hinweises auf die Patenterteilung: **29.05.2013**
(21) Anmeldenummer: 09014927.9
(22) Anmeldetag: 02.12.2009
(51) Int. Cl.: A01G 3/053

(54) **Heckenschere**
Hedge shears
Taille-haie

(30) Priorität: 19.12.2008 DE 102008064007
(43) Veröffentlichungstag der Anmeldung: 23.06.2010
(73) Patentinhaber: Andreas Stihl AG & Co. KG, 71336 Waiblingen (DE)
(72) Erfinder: Heinzelmann, Georg, 71522 Backnang (DE); Hittmann, Markus, 71384 Weinstadt (DE); Fattorusso, Antonio, 71394 Kernen (DE); Stein, Marcus Dr., 70794 Filderstadt (DE)
(74) Vertreter: Wasmuth, Rolf

(56) Entgegenhaltungen:
- DE-A1- 10 161 908
- DE-A1- 19 821 697
- DE-A1- 19 925 281

## Beschreibung

Die Erfindung betrifft eine Heckenschere der im Oberbegriff des Anspruchs 1 angegebenen Gattung.

Eine Heckenschere mit einem hinteren Handgriff und einem Griffrohr geht aus der DE 10 2005 014 576 A1 und der DE 198 21 697 A1 hervor. Derartige Heckenscheren besitzen üblicherweise einen liegend angeordneten Verbrennungsmotor, dessen Kurbelwelle den oder die Messerbalken über ein Getriebe antreibt. Dabei ist das Kurbelgehäuse dem hinteren Handgriff zugewandt angeordnet, und der Zylinder ragt nach vorn zum Griffrohr und zur Messeranordnung. Diese Anordnung des Verbrennungsmotors ist im Einzelnen auch in der DE 101 61 908 A1 gezeigt.

Der Erfindung liegt die Aufgabe zugrunde, eine Heckenschere der gattungsgemäßen Art zu schaffen, die eine geringe Baugröße und ein geringes Gewicht besitzt.

Diese Aufgabe wird durch eine Heckenschere mit den Merkmalen des Anspruchs 1 gelöst.

Es hat sich gezeigt, dass durch Drehen des Verbrennungsmotors um die Drehachse der Kurbelwelle derart, dass der Brennraum des Verbrennungsmotors dem hinteren Handgriff und das Kurbelgehäuse der Messeranordnung zugewandt liegt, eine kürzere Baulänge der Gesamtanordnung erreicht werden kann. Durch die gedrehte Anordnung wird der Abstand zwischen Kurbelwellenachse und Messeranordnung verringert. Dadurch kann das Getriebegehäuse insgesamt kürzer und dadurch deutlich leichter ausgeführt werden. Durch die neue Anordnung des Verbrennungsmotors kann so auf einfache Weise eine geringere Baugröße und ein geringeres Gewicht der Heckenschere erreicht werden.

Vorteilhaft ist der Brennraum in einem Zylinder ausgebildet, dessen Zylinderlängsachse in der Längsebene der Heckenschere liegt. Gegenüber der bekannten Anordnung ist der Verbrennungsmotor um 180° um die Drehachse der Kurbelwelle gedreht. Durch die Anordnung der Zylinderlängsachse in der Längsebene ergibt sich eine vorteilhafte Gewichtsverteilung der Heckenschere, die die Handhabung verbessert. Die Kurbelwelle ist vorteilhaft senkrecht zur Messerbalkenebene angeordnet und die Längsebene ist vorteilhaft eine Längsmittelebene, die die Heckenschere in Längsrichtung mittig teilt. Es können jedoch auch gekippte Anordnungen der Kurbelwelle vorteilhaft sein, bei denen die Kurbelwelle mit der Messerbalkenebene einen Winkel von weniger als 90° einschließt.

Um die Baulänge der Heckenschere weiter zu verkürzen, kann vorgesehen sein, dass die Zylinderlängsachse mit der Längsebene der Heckenschere einen Winkel einschließt, der zwischen 0° und etwa 45° beträgt. Vorteilhaft beträgt der Winkel zwischen etwa 10° und etwa 30°. Es ist vorgesehen, dass der im Brennraum verlaufende Abschnitt der Zylinderlängsachse auf der Seite der Längsebene der Heckenschere liegt, auf der ein Abgasschalldämpfer des Verbrennungsmotors angeordnet ist. Der Zylinder ist damit zum Abgasschalldämpfer hin gekippt. Dadurch ergibt sich eine vorteilhafte Anordnung.

Zweckmäßig ist der Tank an der dem hinteren Handgriff abgewandten Seite des Verbrennungsmotors angeordnet. Der Tank liegt dabei insbesondere in einem vom Griffrohr überspannten Bereich. Durch die Anordnung des Tanks an der dem hinteren Handgriff abgewandten Seite des Verbrennungsmotors wird die Baulänge der Heckenschere verringert. Durch die Anordnung in einem vom Griffrohr überspannten Bereich ist der Tank vom Griffrohr geschützt, so dass eine Beschädigung des Tanks, beispielsweise, wenn die Heckenschere herunterfällt, ohne zusätzliche Bauteile verhindert werden kann. Dadurch ergibt sich ein einfacher, robuster Aufbau der Heckenschere. Der Tank ist dabei zweckmäßig benachbart zum Kurbelgehäuse angeordnet. Vorteilhaft spannt das Griffrohr eine Griffrohrebene auf, die quer zur Messerbalkenebene und quer zur Längsebene der Heckenschere verläuft. Der hintere Handgriff liegt zweckmäßig in der Längsebene der Heckenschere.

Ein einfacher Aufbau ergibt sich, wenn die Heckenschere ein Griffgehäuse besitzt, an dem der hintere Handgriff und das Griffrohr angeordnet sind. Es ist vorgesehen, dass die Heckenschere eine Antriebseinheit besitzt, die den Verbrennungsmotor, ein Getriebe und die Messeranordnung umfasst und die an dem Griffgehäuse über mindestens ein Antivibrationselement schwingungsdämpfend gelagert ist. Der Schwingspalt, der eine Relativbewegung zwischen Verbrennungsmotor und Handgriffen zulässt, ist demnach nicht zwischen den Hangriffen und dem Gehäuse angeordnet, sondern zwischen dem Griffgehäuse und der Antriebseinheit. Dadurch, dass das Gehäuse als Griffgehäuse ausgebildet und mit den Handgriffen fest verbunden ist, ergibt sich ein robuster Aufbau. Es werden gute Führungseigenschaften und gleichzeitig gute Schwingungsdämpfungseigenschaften erzielt. Eine gute Schwingungsdämpfung ergibt sich insbesondere, wenn die Heckenschere vier Antivibrationselemente besitzt, über die sich die Antriebseinheit an dem Griffgehäuse abstützt, wobei zwei Antivibrationselemente im Bereich des Griffrohrs angeordnet sind und zwei Antivibrationselemente auf der dem hinteren Handgriff zugewandten Seite des Verbrennungsmotors. In Draufsicht auf die Heckenschere bilden die vier Antivibrationselemente vorteilhaft Eckpunkte eines Vierecks, insbesondere etwa eines Rechtecks, in dem der Verbrennungsmotor angeordnet ist.

Ein einfacher Aufbau ergibt sich, wenn mindestens ein Antivibrationselement mindestens zwei scheibenförmige Dämpfungselemente umfasst. Vorteilhaft besitzt jedes Dämpfungselement einen inneren und einen äußeren Rand und eine erste und eine zweite Stirnseite, wobei jedes Dämpfungselement mit einem Rand und mit einer Stirnseite mit dem Griffgehäuse und mit dem anderen Rand und mit der anderen Stirnseite mit der Antriebseinheit in Wirkverbindung steht. Über zwei einfache scheibenförmige Dämpfungselemente lässt sich dadurch eine Schwingungsentkopplung in allen Raumrichtungen erreichen. Die Dämpfungselemente sind vorteilhaft als Cellastopuffer, also als geschäumte Kunststoffelemente, ausgebildet. Zweckmäßig sind alle Antivibrationselemente der Heckenschere identisch ausgebildet.

Vorteilhaft ist mindestens ein Antivibrationselement in einer am Griffgehäuse ausgebildeten Aufnahme angeordnet. Zur Begrenzung der Relativbewegung von Antriebseinheit und Griffgehäuse ist vorgesehen, dass mindestens eine Aufnahme einen radialen und zwei axiale Anschläge für das Antivibrationselement bildet.

Ein einfacher Aufbau des Griffgehäuses ergibt sich, wenn das Griffgehäuse eine Gehäuseschale und einen Gehäusedeckel umfasst, wobei der hintere Handgriff und das Griffrohr fest mit der Gehäuseschale verbunden sind. Der hintere Handgriff ist dabei vorteilhaft mindestens teilweise einteilig mit der Gehäuseschale ausgebildet. Ein einfacher Aufbau mit wenigen Bauteilen ergibt sich, wenn auch der Tank mindestens teilweise einteilig mit der Gehäuseschale ausgebildet ist.

Es ist vorgesehen, dass die Heckenschere einen Vergaser besitzt, der fest mit dem Verbrennungsmotor verbunden ist. Der Vergaser ist demnach vom Verbrennungsmotor nicht über die Antivibrationselemente schwingungsentkoppelt. Vorteilhaft besitzt die Heckenschere einen Abgasschalldämpfer. Eine gute Gewichtsverteilung der Heckenschere und damit gute Führungseigenschaften lassen sich erreichen, wenn der Vergaser und der Abgasschalldämpfer auf gegenüberliegenden Seiten der Längsebene der Heckenschere angeordnet sind. Der Vergaser und der Abgasschalldämpfer liegen dabei vorteilhaft oberhalb der Messerebene.

Ein Ausführungsbeispiel der Erfindung wird im Folgenden anhand der Zeichnung erläutert. Es zeigen:
- Fig. 1: eine Heckenschere nach dem Stand der Technik in Draufsicht,
- Fig. 2: eine Heckenschere nach der Erfindung in Draufsicht,
- Fig. 3: die Heckenschere aus Fig. 2 in Draufsicht mit abgenommenem Gehäusedeckel,
- Fig. 4: eine schematische Darstellung eines Längsschnitts durch die Heckenschere aus Fig. 2,
- Fig. 5: eine perspektivische Darstellung der Gehäuseschale und der Messeranordnung der Heckenschere,
- Fig. 6: eine Schnittdarstellung der Anordnung aus Fig. 5 im Bereich des Getriebegehäuses und des Tanks,
- Fig. 7: einen Schnitt durch ein Antivibrationselement der Heckenschere,
- Fig. 8: eine Draufsicht auf ein Ausführungsbeispiel einer Heckenschere mit abgenommenem Gehäusedeckel,
- Fig. 9: eine perspektivische Darstellung der Heckenschere aus Fig. 8 mit abgenommenem Gehäusedeckel.

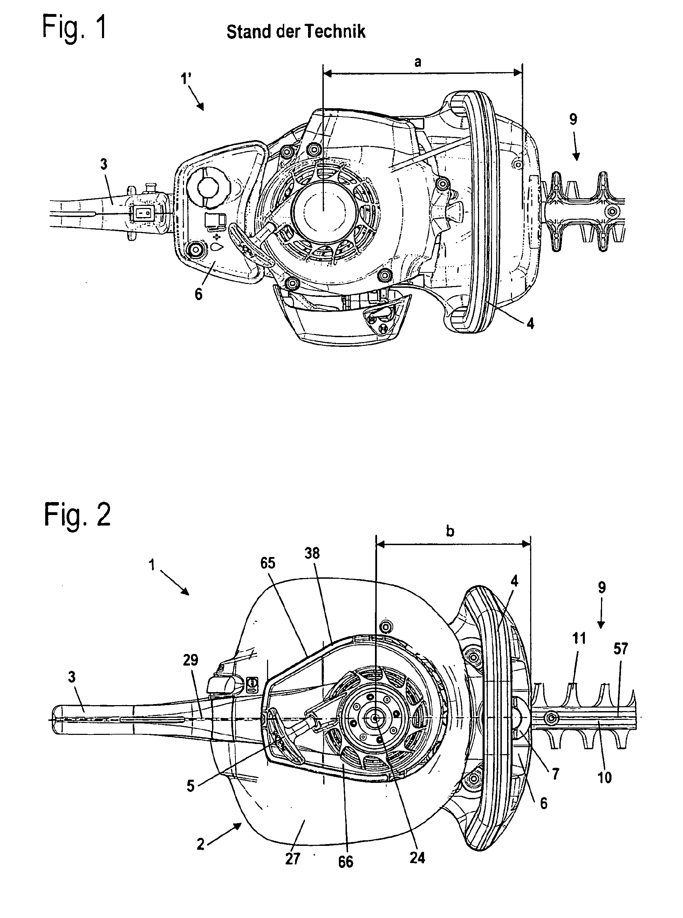

Fig. 1 zeigt eine Heckenschere 1' nach dem Stand der Technik. Die Heckenschere 1' besitzt einen hinteren Handgriff 3 und auf der gegenüberliegenden Seite eines Motorgehäuses eine Messeranordnung 9. An der dem hinteren Handgriff 3 abgewandten Seite ist ein Griffrohr 4 vorgesehen. Ein Tank 6 ist zwischen dem hinteren Handgriff 3 und dem Motorgehäuse angeordnet. Der Verbrennungsmotor der Heckenschere 1' ist mit dem Kurbelgehäuse zum hinteren Handgriff 3 und mit dem Zylinder zur Messeranordnung 9 ausgerichtet. Dadurch ist der Abstand a zwischen der Drehachse 24 der Kurbelwelle und der Messeranordnung 9 vergleichsweise groß.

Fig. 2 zeigt eine Heckenschere 1 nach der Erfindung. Die Heckenschere 1 besitzt ein Griffgehäuse 2, an dem ein hinterer Handgriff 3 und ein Griffrohr 4 festgelegt sind. Das Griffgehäuse 2 besitzt einen Gehäusedeckel 27, der eine Aussparung 65 aufweist. In der Aussparung 65 ist ein Lüfterraddeckel 66 angeordnet. Zwischen dem Lüfterraddeckel 66 und der Aussparung 65 ist ein Schwingspalt 38 ausgebildet. Aus dem Lüfterraddeckel 66 ragt ein Startergriff 5 einer Starteinrichtung eines Verbrennungsmotors der Heckenschere. Der hintere Handgriff 3 und das Griffrohr 4 sind an gegenüberliegenden Seiten des Griffgehäuses 2 angeordnet.

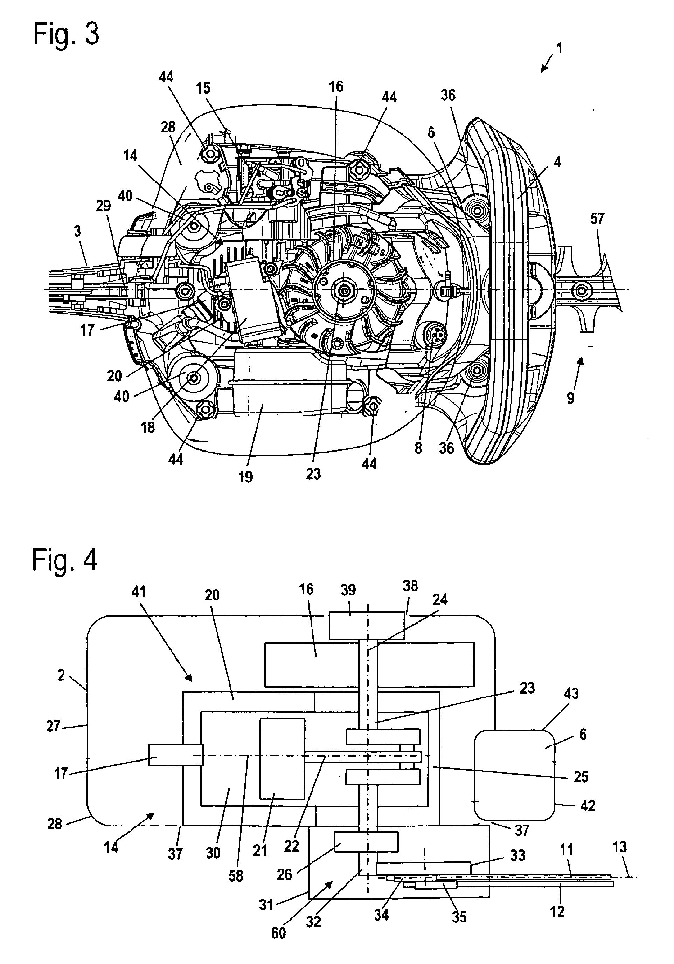

Die Heckenschere 1 besitzt eine Messeranordnung 9 mit einem ersten Messerbalken 11 und einem zweiten Messerbalken 12 (Fig. 4), die an einer Führungsschiene 10 hin- und her beweglich gelagert sind. In Fig. 2 sind die Messerbalken 11 und 12 deckungsgleich übereinander angeordnet. Die Messeranordnung 9 ragt auf der dem Griffrohr 4 benachbarten Seite des Griffgehäuses 2 nach vorne. Die Heckenschere 1 besitzt einen im Folgenden noch näher beschriebenen Verbrennungsmotor mit einer Kurbelwelle, deren Drehachse 24 zur Messeranordnung 9 einen Abstand b aufweist, der deutlich kleiner als der Abstand a bei Heckenscheren 1' nach dem Stand der Technik ist. Die Heckenschere 1 besitzt eine Längsebene 29, die die Drehachse 24 der Kurbelwelle enthält. Die Längsebene 29 ist dabei die Längsmittelebene der Heckenschere 1 und steht senkrecht auf einer in Fig. 4 gezeigten Messerbalkenebene 13. Die Längsebene 29 kann mit der Messerbalkenebene 13 jedoch auch einen Winkel von weniger als 90° einschließen. Die Messerbalkenebene 13 ist die Ebene, in der sich der erste Messerbalken 11 erstreckt.

Wie die Figuren 2 und 3 zeigen, besitzt die Messeranordnung 9 eine Längsmittelachse 57. Die Längsmittelachse 57 liegt in der Längsebene 29 der Heckenschere 1 und schneidet die Drehachse 24 der Kurbelwelle 23.

Das Griffrohr 4 verläuft in einer Ebene, die quer zur Längsebene 29 liegt. Das Griffrohr 4 übergreift einen Tank 6. Der Tank 6 besitzt einen Verschlussdeckel 7, der in Draufsicht auf die Heckenschere 1 gesehen auf der Höhe des Griffrohrs 4 angeordnet und vom Griffrohr 4 übergriffen ist. Dadurch ist der Verschlussdeckel 7 vor unbeabsichtigtem Öffnen geschützt.

In Fig. 3 ist der Aufbau der Heckenschere 1 im Einzelnen gezeigt. Wie Fig. 3 zeigt, besitzt der Tank 6 ein Entlüftungsventil 8, das in dem vom Gehäusedeckel 27 (Fig. 2) abgedeckten Bereich des Griffgehäuses 2 aus dem Tank 6 ragt.

Im Griffgehäuse 2 ist ein Verbrennungsmotor 14 angeordnet, der einen Vergaser 15 und einen Abgasschalldämpfer 19 besitzt. Der Vergaser 15 und der Abgasschalldämpfer 19 sind auf gegenüberliegenden Seiten der Längsebene 29 und bezogen au die Messerbalkenebene 13 etwa auf der gleichen Höhe wie der Verbrennungsmotor 14 angeordnet und mit diesem fest verbunden. Der Verbrennungsmotor 14 besitzt ein Lüfterrad 16, das unter dem Lüfterraddeckel 66 (Fig. 2) angeordnet ist. Am Verbrennungsmotor 14 ist ein Zündmodul 18 angeordnet, das die Zündenergie für eine Zündkerze 17 bereitstellt. Die Zündkerze 17 ragt in einen Zylinder 20 des Verbrennungsmotors 14. Der Zylinder 20 ist benachbart zum hinteren Handgriff 3 und der Messeranordnung 9 abgewandt angeordnet. Die Zündkerze 17 ragt dadurch in Richtung auf den hinteren Handgriff 3.

Das Griffgehäuse 2 besitzt eine Gehäuseschale 28, die von dem in Fig. 2 gezeigten Gehäusedeckel 27 nach oben abgedeckt ist. Die Gehäuseschale 28 weist insgesamt vier Aufnahmen 40 für Antivibrationselemente 36 auf. In Fig. 3 sind die beiden hinteren Aufnahmen 40 ohne Antivibrationselemente 36 gezeigt, während in den beiden vorderen Aufnahmen 40 Antivibrationselemente 36 angeordnet sind. Die beiden vorderen Aufnahmen 40 sind dadurch nicht sichtbar. Die vier Antivibrationselemente 36 sind an gedachten Eckpunkten eines Vierecks angeordnet, das den Verbrennungsmotor 14 enthält. Das Viereck ist dabei annähernd rechteckig. Zwei Antivibrationselemente 36 sind im Bereich des Griffrohrs 4, in Richtung der Längsmittelachse 57 gesehen also etwa auf der Höhe des Griffrohrs 4 angeordnet, während die beiden anderen Antivibrationselemente 36 in einem Bereich zwischen dem Zylinder 20 und dem hinteren Handgriff 3 vorgesehen sind. Die beiden im Bereich des Griffrohrs 4 angeordneten Antivibrationselemente 36 sind dabei nahe der Enden des Griffrohrs 4 und etwa zwischen den beiden Enden des Griffrohrs 4 angeordnet. In Fig. 3 sind vier Schraubdome 44 der Gehäuseschale 28 gezeigt, an denen der Gehäusedeckel 27 mit der Gehäuseschale 28 verschraubt ist.

Fig. 4 zeigt den Aufbau einer Antriebseinheit 41 der Heckenschere 1, die den Verbrennungsmotor 14, ein Getriebe 60 und die Messeranordnung 9 umfasst. Die Antriebseinheit 41 umfasst außerdem das Lüfterrad 16 sowie eine Starteinrichtung 39. Wie Fig. 4 schematisch zeigt, ist das Griffgehäuse 2 im Bereich der Starteinrichtung 39 durch den Schwingspalt 38 von der Antriebseinheit 41 getrennt und im Bereich eines Getriebegehäuses 31, in dem das Getriebe 60 angeordnet ist, durch einen Schwingspalt 37. Der Tank 6 ist dabei fest mit dem Griffgehäuse 2 verbunden und durch den Schwingspalt 37 von der Antriebseinheit 41 getrennt. Wie Fig. 4 schematisch zeigt, ist der Tank 6 aus einer unteren Tankhalbschale 42 und einer oberen Tankhalbschale 43 aufgebaut. Die beiden Tankhalbschalen 42, 43 sind vorteilhaft durch Reibschweißen miteinander verbunden.

Wie Fig. 4 schematisch zeigt, besitzt der Verbrennungsmotor 14 den Zylinder 20, in dem ein Kolben 21 hin- und hergehend gelagert ist. Der Kolben 21 treibt über ein Pleuel 22 eine in einem Kurbelgehäuse 25 um die Drehachse 24 drehbar gelagerte Kurbelwelle 23 an. Der Kolben 21 begrenzt einen Brennraum 30, in den die Zündkerze 17 ragt. Der Brennraum 30 liegt auf der dem hinteren Handgriff 3 (Fig. 3) zugewandten Seite des Kolbens 21. Der Tank 6 ist benachbart zum Kurbelgehäuse 25 angeordnet.

Das Lüfterrad 16 ist drehfest mit der Kurbelwelle 23 verbunden. Die Starteinrichtung 39 ist vorteilhaft eine Federstarteinrichtung, die auf die Kurbelwelle 23 beziehungsweise auf das Lüfterrad 16 wirkt. An der dem Lüfterrad 16 gegenüberliegenden Seite des Kurbelgehäuses 25 ist die Kurbelwelle 23 mit einer Fliehkraftkupplung 26 verbunden. Die Fliehkraftkupplung 26 verbindet ein Antriebsritzel 32 mit der Kurbelwelle 23, sobald eine Einkuppeldrehzahl überschritten wird.

Das Antriebsritzel 32 ist Teil des Getriebes 60 und kämmt mit einem in Fig. 4 schematisch gezeigten Zahnrad 33, an dem ein erster Exzenter 34 und ein zweiter Exzenter 35 angeordnet sind. Die beiden Exzenter 34, 35 sind beide auf der dem Griffgehäuse 2 abgewandten Seite des Zahnrads 33 angeordnet. An dem ersten Exzenter 34 ist der erste Messerbalken 11 angeordnet und an dem zweiten Exzenter 35 der zweite Messerbalken 12. Über die Exzenter 34 und 35 sind die beiden Messerbalken 11 und 12 gegensinnig hin- und hergehend angetrieben.

Wie Fig. 4 zeigt, steht die Drehachse 24 der Kurbelwelle 23 senkrecht auf der Messerbalkenebene 13. Der Zylinder 20 besitzt eine Zylinderlängsachse 58, die ebenso wie die Drehachse 24 der Kurbelwelle 23 in der Längsebene 29 der Heckenschere 1 (Fig. 3) liegt.

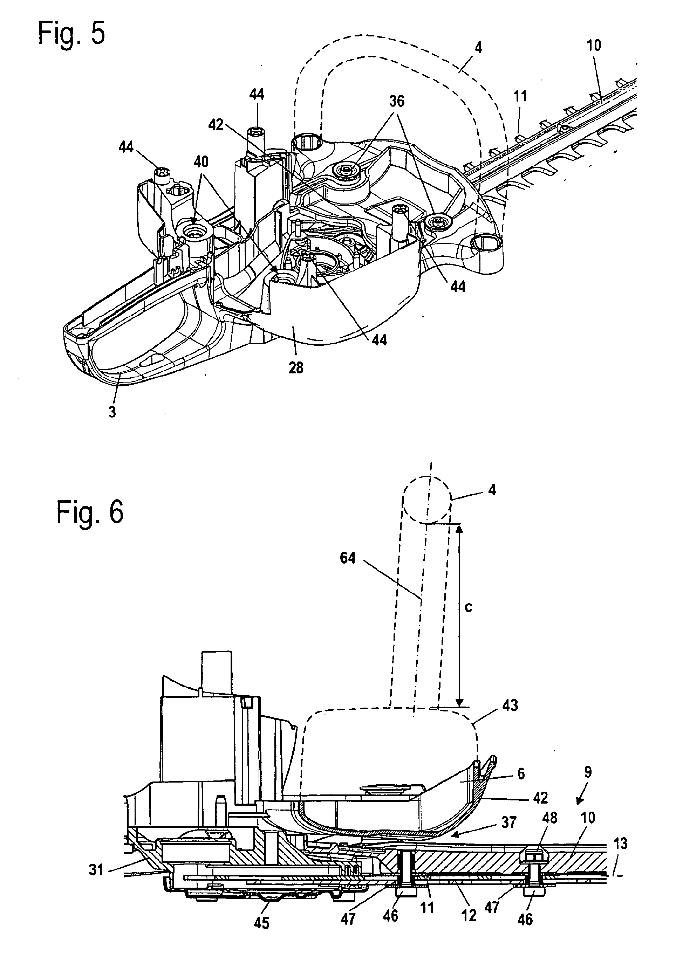

Fig. 5 zeigt den Aufbau der Gehäuseschale 28 im Einzelnen. An der Gehäuseschale 28 ist der hintere Handgriff 3 angeformt.

Der obere Bereich des hinteren Handgriffs 3, an dem Bedienelemente zur Bedienung des Verbrennungsmotors 14 gelagert sind, ist offen ausgebildet und von einem in Fig. 5 nicht gezeigten Deckel verschlossen. Die untere Tankhalbschale 42 ist ebenfalls an der Gehäuseschale 28 angeformt. In Fig. 5 ist auch gezeigt, wie der Tank 6 durch das Griffrohr 4 übergriffen und so vor äußeren Einflüssen wie Stößen oder dgl. geschützt ist.

Fig. 6 zeigt schematisch die Anordnung des Griffrohrs 4. Das Griffrohr 4 liegt in einer Griffrohrebene 64, die quer zur Messerbalkenebene 13 liegt. Wie Fig. 6 zeigt, ist die Griffrohrebene 64 zur Messerbalkenebene 13 vorteilhaft leicht geneigt. Die Griffrohrebene 64 liegt quer zur Längsebene 29 der Heckenschere 1, die in Fig. 6 der Schnittebene der Figur entspricht. Die Griffrohrebene 64 liegt dabei vorteilhaft senkrecht zur Längsebene 29. Das Griffrohr 4 ist vorteilhaft spiegelsymmetrisch zur Längsebene 29 der Heckenschere 1 ausgebildet.

Wie Fig. 6 zeigt, erstreckt sich das Griffrohr 4 in einem Abstand c oberhalb des Tanks 6 und überspannt den Tank 6. Der Tank 6 liegt damit innerhalb des Bereichs, der vom Griffrohr 4 übergriffen wird. Wie Fig. 6 auch zeigt, ist der Tank 6 in einem geringen Abstand oberhalb der Messeranordnung 9 und des Getriebegehäuses 31 angeordnet und von diesen durch den Schwingspalt 37 getrennt. Das Getriebegehäuse 31 ist auf der dem Tank 6 abgewandten Seite von einem Getriebegehäusedeckel 45 verschlossen, der vorteilhaft als Blechbiegeteil ausgeführt ist.

Die Führungsschiene 10 der Messeranordnung 9 ist als Formteil, vorteilhaft als Druckgussteil ausgebildet. Die Führungsschiene 10 besteht dabei aus einem Leichtmetall, insbesondere aus Magnesium. An der Führungsschiene 10 sind Schrauben 46 befestigt, die Gleitführungen 47 tragen, an denen die Messerbalken 11 und 12 längsbeweglich gelagert sind. Die dem Getriebegehäuse 31 zugewandte, erste Schraube 46 ist dabei direkt in die Führungsschiene 10 eingeschraubt, während die weiteren Schrauben 46 mit Muttern 48 an der Führungsschiene 10 gehalten sind. Durch die Anordnung der Kurbelwelle 23 an der der Messeranordnung 9 zugewandten Seite des Zylinders 20 ist das Getriebegehäuse 31 in Längsrichtung der Heckenschere 1 vergleichsweise kurz ausgebildet. Dadurch besitzt das Getriebegehäuse 31 verglichen mit bekannten Heckenscheren 1' ein deutlich geringeres Gewicht.

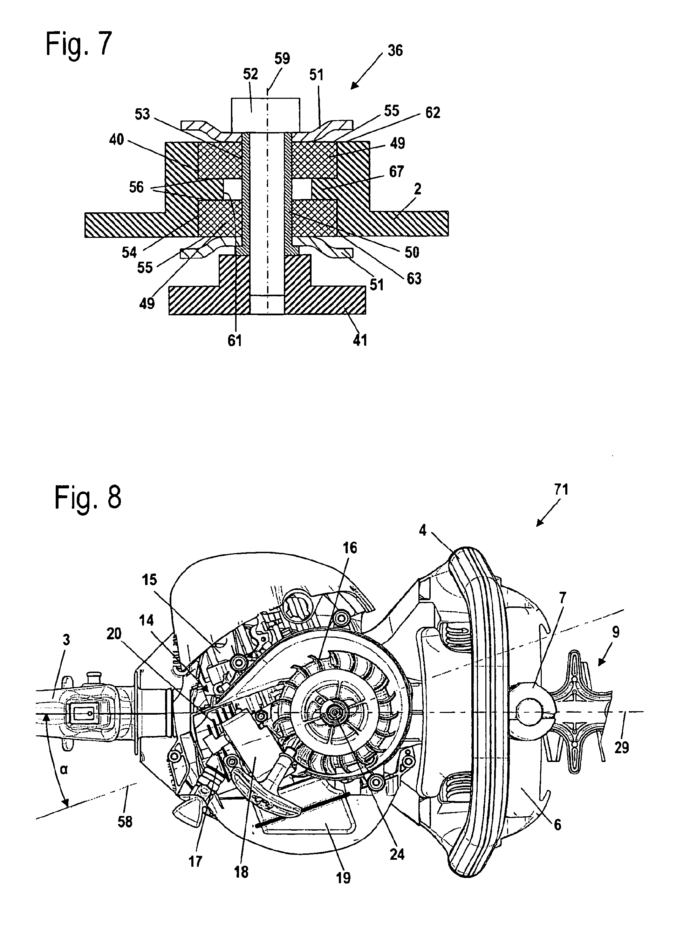

Fig. 7 zeigt den Aufbau der Antivibrationselemente 36, mit denen die Antriebseinheit 41 am Griffgehäuse 2 gelagert ist. Dabei sind vorteilhaft alle Antivibrationselemente 36 identisch ausgebildet. Das Antivibrationselement 36 besitzt zwei Dämpfungselemente, die als Cellastopuffer 49 ausgebildet sind. Die Cellastopuffer 49 bestehen aus geschäumtem Kunststoffmaterial und besitzen gute Schwingungsdämpfungseigenschaften. Die Cellastopuffer 49 sind scheibenförmig ausgebildet und mit geringem Abstand zueinander auf einer Hülse 50 gelagert. Die Cellastopuffer 49 liegen mit ihrem inneren Rand 53 an der Hülse 50 an. Mit ihrem äußeren Rand 54 sind die beiden Cellastopuffer 49 in der Aufnahme 40 des Griffgehäuses 2 gehalten. Die Aufnahme 40 ist zylindrisch mit einem mittleren, umlaufenden Rand 67 ausgebildet, der zwischen die beiden Cellastopuffer 49 ragt. Die beiden Cellastopuffer 49 liegen mit ihren äußeren, ersten Stirnseiten 55 jeweils an einer Scheibe 51 an. Die beiden Scheiben 51 sind auf der Hülse 50 gelagert und an ihrem äußeren Rand nach außen und von den Cellastopuffern 49 weggebogen. Mit ihrer inneren, zweiten Stirnseite 56 liegen die Cellastopuffer 49 an dem umlaufenden Rand 67 der Aufnahme 40 an. Durch die Hülse 50 ragt eine Schraube 52, deren Längsmittelachse mit einer Längsmittelachse 59 des Antivibrationselements 36 zusammenfällt. Die Hülse 50 liegt mit einer Stirnseite am Kopf der Schraube 52 und mit der gegenüberliegenden Stirnseite an der Antriebseinheit 41 an. Die Länge der Hülse 50 gibt die unbelastete axiale Länge des Antivibrationselements 36 vor. Durch entsprechende Abmessung der Hülse 50 kann das Antivibrationselement 36 vorgespannt sein.

Die beiden Scheiben 51 halten die Cellastopuffer 49 zwischen dem Kopf der Schraube 52 und der Antriebseinheit 41 und bilden Anlageflächen für die Cellastopuffer 49. Der nach außen gebogene Rand der Scheiben 51 wirkt mit axialen Anschlägen 62 und 63 zusammen, die an den Stirnseiten der Aufnahme 40 ausgebildet sind. Dadurch ist die axiale Bewegung des Antivibrationselements 36, also die Relativbewegung des Griffgehäuses 2 gegenüber der Antriebseinheit 41 in Richtung der Längsmittelachse 59, begrenzt. Zur Begrenzung der radialen Bewegung ist an der Innenseite des Rands 67 ein radialer Anschlag 61 gebildet, der mit der Außenwand der Hülse 50 zusammenwirkt und so die radiale Relativbewegung zwischen Griffgehäuse 2 und Antriebseinheit 41 begrenzt.

Der gezeigte Aufbau der Antivibrationselemente 36 ist einfach, und es können einfache scheibenförmige Cellastopuffer 49 verwendet werden. Gleichzeitig werden gute Schwingungsdämpfungseigenschaften erreicht. Die Antivibrationselemente 36 besitzen Anschläge in radialer und axialer Richtung, so dass keine separaten Anschläge vorgesehen werden müssen. Bei Zerstörung der Cellastopuffer 49 sind das Griffgehäuse 2 und die Antriebseinheit 41 noch über die Scheiben 51 miteinander verbunden, so dass auch beim Versagen der Cellastopuffer 49 das Griffgehäuse 2 mit der Antriebseinheit 41 verbunden bleibt.

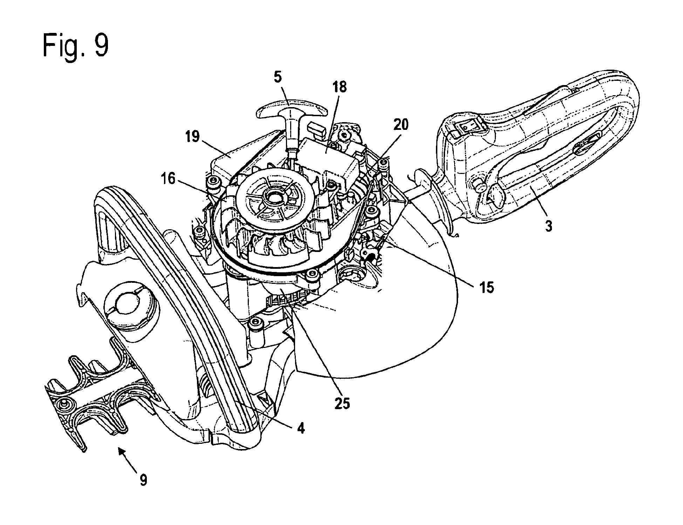

Die Figuren 8 und 9 zeigen ein Ausführungsbeispiel einer Heckenschere 71, deren Aufbau im Wesentlichen dem der Heckenschere 1 entspricht. Gleiche Bezugszeichen kennzeichnen einander entsprechende Elemente. Die Heckenschere 71 besitzt einen Verbrennungsmotor 14 mit einem Kurbelgehäuse 25 und einem Zylinder 20. Das Kurbelgehäuse 25 liegt einem Griffrohr 4 der Heckenschere 71 zugewandt. Im Zylinder 20 ist ein nicht gezeigter Brennraum ausgebildet, in den eine Zündkerze 17 ragt. Der Zylinder 20 besitzt eine Zylinderlängsachse 58, die mit der Längsebene 29 der Heckenschere 71 einen Winkel α von mehr als 0° einschließt. Der Winkel α beträgt vorteilhaft zwischen 0° und etwa 45° und insbesondere zwischen etwa 10° und etwa 30°. Als besonders vorteilhaft hat sich ein Winkel α von etwa 20° herausgestellt. Die Zylinderlängsachse 58 ist dabei in dem zwischen der Drehachse 24 der Kurbelwelle 23 und dem hinteren Handgriff 3 liegenden Bereich auf die Seite der Längsebene 29 geneigt, auf der der Abgasschalldämpfer 19 angeordnet ist. Im Bereich zwischen der Drehachse 24 der Kurbelwelle 23 und dem Griffrohr 4 verläuft die Zylinderlängsachse 58 auf der Seite der Längsebene 29, auf der der Vergaser 15 angeordnet ist. Wie insbesondere Fig. 8 zeigt, ragt die Zündkerze 17 seitlich nach außen. Dadurch, dass die Zündkerze 17 nicht zwischen dem Zylinder 20 und dem hinteren Handgriff 3 angeordnet ist, sondern seitlich versetzt hiervon, kann die Baugröße der Heckenschere 71 weiter verringert werden.

## Patentansprüche

1. Heckenschere mit einem hinteren Handgriff (3), einem Griffrohr (4) und mit einer Messeranordnung (9), wobei die Messeranordnung (9) mindestens einen Messerbalken (11, 12) umfasst, der in einer Messerbalkenebene (13) liegt und der von einem Verbrennungsmotor (14) hin- und hergehend angetrieben ist, wobei der Verbrennungsmotor (14) einen Brennraum (30) und eine in einem Kurbelgehäuse (25) um eine Drehachse (24) drehbar gelagerte Kurbelwelle (23) besitzt, wobei die Messeranordnung (9) eine Längsmittelachse (57) besitzt, und wobei die Heckenschere (1, 71) eine Längsebene (29) aufweist, die parallel zur Drehachse (24) der Kurbelwelle (23) und quer zur Messerbalkenebene (13) angeordnet ist und in der die Längsmittelachse (57) der Messeranordnung (9) liegt, und wobei die Heckenschere (1, 71) mindestens einen Tank (6) besitzt,
**dadurch gekennzeichnet, dass** der Brennraum (30) des Verbrennungsmotors (14) dem hinteren Handgriff (3) zugewandt liegt und dass das Kurbelgehäuse (25) der Messeranordnung (9) zugewandt liegt.

2. Heckenschere nach Anspruch 1,
**dadurch gekennzeichnet, dass** der Brennraum (30) in einem Zylinder (20) ausgebildet ist, dessen Zylinderlängsachse (58) in der Längsebene (29) der Heckenschere (1) liegt.

3. Heckenschere nach Anspruch 1,
**dadurch gekennzeichnet, dass** der Brennraum (30) in einem Zylinder (20) ausgebildet ist, dessen Zylinderlängsachse (58) mit der Längsebene (29) der Heckenschere (71) einen Winkel (α) einschließt, der zwischen 0° und etwa 45° beträgt, wobei der im Brennraum (30) verlaufende Abschnitt der Zylinderlängsachse (58) insbesondere auf der Seite der Längsebene (29) der Heckenschere (71) liegt, auf der ein Abgasschalldämpfer (19) des Verbrennungsmotors (14) angeordnet ist.

4. Heckenschere nach einem der Ansprüche 1 bis 3,
**dadurch gekennzeichnet, dass** der Tank (6) an der dem hinteren Handgriff (3) abgewandten Seite des Verbrennungsmotors (14) angeordnet ist.

5. Heckenschere nach einem der Ansprüche 1 bis 4,
**dadurch gekennzeichnet, dass** der Tank (6) in einem vom Griffrohr (4) überspannten Bereich liegt.

6. Heckenschere nach einem der Ansprüche 1 bis 5,
**dadurch gekennzeichnet, dass** das Griffrohr (4) eine Griffrohrebene (64) aufspannt, die quer zur Messerbalkenebene (13) und quer zur Längsebene (29) der Heckenschere (1, 71) verläuft.

7. Heckenschere nach einem der Ansprüche 1 bis 6,
**dadurch gekennzeichnet, dass** der hintere Handgriff (3) in der Längsebene (29) der Heckenschere (1, 71) liegt.

8. Heckenschere nach einem der Ansprüche 1 bis 7,
**dadurch gekennzeichnet, dass** die Heckenschere (1, 71) ein Griffgehäuse (2) besitzt, an dem der hintere Handgriff (3) und das Griffrohr (4) angeordnet sind.

9. Heckenschere nach Anspruch 8,
**dadurch gekennzeichnet, dass** die Heckenschere (1, 71) eine Antriebseinheit (41) besitzt, die den Verbrennungsmotor (14), ein Getriebe (60) und die Messeranordnung (9) umfasst und die an dem Griffgehäuse (2) über mindestens ein Antivibrationselement (36) schwingungsdämpfend gelagert ist.

10. Heckenschere nach Anspruch 9,
**dadurch gekennzeichnet, dass** die Heckenschere (1, 71) vier Antivibrationselemente (36) besitzt, über die sich die Antriebseinheit (41) an dem Griffgehäuse (2) abstützt, wobei zwei Antivibrationselemente (36) im Bereich des Griffrohrs (4) angeordnet sind und zwei Antivibrationselemente (36) auf der dem hinteren Handgriff (3) zugewandten Seite des Verbrennungsmotors (14).

11. Heckenschere nach Anspruch 9 oder 10,
**dadurch gekennzeichnet, dass** mindestens ein Antivibrationselement (36) zwei scheibenförmige Dämpfungselemente umfasst, wobei insbesondere jedes Dämpfungselement einen inneren Rand (53) und einen äußeren Rand (54) sowie eine erste Stirnseite (55) und eine zweite Stirnseite (56) besitzt, wobei jedes Dämpfungselement mit einem Rand (54) und mit einer Stirnseite (56) mit dem Griffgehäuse (2) und mit dem anderen Rand (53) und der anderen Stirnseite (55) mit der Antriebseinheit (41) in Wirkverbindung steht, und wobei die Dämpfungselemente insbesondere als Cellastopuffer (49) ausgebildet sind.

12. Heckenschere nach einem der Ansprüche 9 bis 11,
**dadurch gekennzeichnet, dass** mindestens ein Antivibrationselement (36) in einer am Griffgehäuse (2) ausgebildeten Aufnahme (40) angeordnet ist, wobei insbesondere mindestens eine Aufnahme (40) einen radialen Anschlag (61) und zwei axiale Anschläge (62, 63) für das Antivibrationselement (36) bildet, die die Relativbewegung von Antriebseinheit (41) und Griffgehäuse (2) begrenzen.

13. Heckenschere nach einem der Ansprüche 8 bis 12,
**dadurch gekennzeichnet, dass** das Griffgehäuse (2) eine Gehäuseschale (28) und einen Gehäusedeckel (27) umfasst, wobei der hintere Handgriff (3) und das Griffrohr (4) fest mit der Gehäuseschale (28) verbunden sind, wobei der hintere Handgriff (3) insbesondere mindestens teilweise einteilig mit der Gehäuseschale (28) ausgebildet ist und wobei der Tank (6) insbesondere mindestens teilweise einteilig mit der Gehäuseschale (28) ausgebildet ist.

14. Heckenschere nach einem der Ansprüche 1 bis 13,
**dadurch gekennzeichnet, dass** die Heckenschere (1, 71) einen Vergaser (15) besitzt, der fest mit dem Verbrennungsmotor (14) verbunden ist, wobei die Heckenschere (1, 71) insbesondere einen Abgasschalldämpfer (19) umfasst, wobei der Vergaser (15) und der Abgasschalldämpfer (19) auf gegenüberliegenden Seiten der Längsebene (29) der Heckenschere (1, 71) angeordnet sind.

## Claims

1. Hedge trimmer comprising a rear handle (3), a handle tube (4) and a blade assembly (9), wherein the blade assembly (9) comprises at least one cutting bar (11, 12), which lies in a cutting bar plane (13) and is driven in a reciprocating manner by an internal combustion engine (14), wherein the internal combustion engine (14) has a combustion chamber (30) and a crankshaft (23) installed in a crankcase (25) for rotating about an axis of rotation (24), wherein the blade assembly (9) has a longitudinal central axis (57) and wherein the hedge trimmer (1, 71) has a longitudinal plane (29) which is oriented parallel to the axis of rotation (24) and perpendicular to the cutting bar plane (13) and in which the longitudinal central axis (57) of the blade assembly (9) lies, and wherein the hedge trimmer (1, 71) has at least one tank (6),
**characterised in that** the combustion chamber (30) of the internal combustion engine (14) faces the rear handle (3), and **in that** the crankcase (25) faces the blade assembly (9).

2. Hedge trimmer according to claim 1,
**characterised in that** the combustion chamber (30) is formed in a cylinder (20) having a longitudinal cylinder axis (58) lying in the longitudinal plane (29) of the hedge trimmer (1).

3. Hedge trimmer according to claim 1,
**characterised in that** the combustion chamber (30) is formed in a cylinder (20) having a longitudinal cylinder axis (58) which encloses an angle (α) between 0° and approximately 45° with the longitudinal plane (29) of the hedge trimmer (71), wherein the section of the longitudinal cylinder axis (58) which extends within the combustion chamber (30) lies in particular on the side of the longitudinal plane (29) of the hedge trimmer (71) on which a silencer (19) of the internal combustion engine (14) is located.

4. Hedge trimmer according to any of claims 1 to 3,
**characterised in that** the tank (6) is located on the side of the internal combustion engine (14) which is remote from the rear handle (3).

5. Hedge trimmer according to any of claims 1 to 4,
**characterised in that** the tank (6) is situated in a region spanned by the handle tube (4).

6. Hedge trimmer according to any of claims 1 to 5,
**characterised in that** the handle tube (4) spans a handle tube plane (64) which extends at right angles to the cutting bar plane (13) and to the longitudinal plane (29) of the hedge trimmer (1, 71).

7. Hedge trimmer according to any of claims 1 to 6,
**characterised in that** the rear handle (3) lies in the longitudinal plane (29) of the hedge trimmer (1, 71).

8. Hedge trimmer according to any of claims 1 to 7,
**characterised in that** the hedge trimmer (1, 71) has a handle housing (2) in which the rear handle (3) and the handle tube (4) are located.

9. Hedge trimmer according to claim 8,
**characterised in that** the hedge trimmer (1, 71) has a drive unit (41) which comprises the internal combustion engine (14), a gearbox (60) and the blade assembly (9) and which is anti-vibration-mounted on the handle housing (2) by way of at least one anti-vibration element (36).

10. Hedge trimmer according to claim 9,
**characterised in that** the hedge trimmer (1, 71) has four anti-vibration elements (36), by way of which the drive unit (41) is supported on the handle housing (2), two anti-vibration elements (36) being located in the region of the handle tube (4) and two anti-vibration elements (36) being located on the side of the internal combustion engine (14) which faces the rear handle (3).

11. Hedge trimmer according to claim 9 or 10,
**characterised in that** at least one anti-vibration element (36) comprises two disc-shaped damping elements, each damping element in particular having an inner edge (53) and an outer edge (54) as well as a first end face (55) and a second end face (56), wherein each damping element is operatively connected to the handle housing (2) with one edge (54) and one end face (56) and to the drive unit (41) with the other edge (53) and the other end face (55), and wherein the damping elements are in particular designed as Cellasto buffers (49).

12. Hedge trimmer according to any of claims 9 to 11,
**characterised in that** at least one anti-vibration element (36) is located in a receptacle (40) on the handle housing (2), at least one receptacle (40) forming a radial stop (61) and two axial stops (62, 63) for the anti-vibration element (36), which stops limit the relative movement of the drive unit (41) and the handle housing (2).

13. Hedge trimmer according to any of claims 8 to 12,
**characterised in that** the handle housing (2) comprises a housing shell (28) and a housing cover (27), wherein the rear handle (3) and the handle tube (4) are permanently joined to the housing shell (28), wherein the rear handle (3) is in particular at least partially formed integral with the housing shell (28) and wherein the tank (6) is in particular at least partially formed integral with the housing shell (28).

14. Hedge trimmer according to any of claims 1 to 13,
**characterised in that** the hedge trimmer (1, 71) comprises a carburettor (15) which is permanently joined to the internal combustion engine (14), wherein the hedge trimmer (1, 71) in particular comprises a silencer (19), the carburettor (15) and the silencer (19) being located on opposite sides of the longitudinal plane (29) of the hedge trimmer (1, 71).

## Revendications

1. Taille-haie avec une poignée arrière (3), une poignée tubulaire (4) et un dispositif à lame (9), étant précisé que le dispositif à lame (9) comprend au moins une lame (11, 12) qui est située dans un plan de lame (13) et qui est entraînée dans un mouvement alternatif par un moteur à combustion interne (14), que le moteur à combustion interne (14) a une chambre de combustion (30) et un vilebrequin (23) monté en rotation sur un axe de rotation (24) dans un carter moteur (25), que le dispositif à lame (9) a un axe médian longitudinal (57), et que le taille-haie (1, 71) présente un plan longitudinal (29) qui est disposé parallèlement à l'axe de rotation (24) du vilebrequin (23) et transversalement par rapport au plan de lame (13) et dans lequel est situé l'axe médian longitudinal (57) du dispositif à lame (9), et que le taille-haie (1, 71) a au moins un réservoir (6),
**caractérisé en ce que** la chambre de combustion (30) du moteur à combustion interne (14) est tournée vers la poignée arrière (3) et **en ce que** le carter moteur (25) est tourné vers le dispositif à lame (9).

2. Taille-haie selon la revendication 1,
**caractérisé en ce que** la chambre de combustion (30) est formée dans un cylindre (20) dont l'axe longitudinal (58) est situé dans le plan longitudinal (29) du taille-haie (1).

3. Taille-haie selon la revendication 1,
**caractérisé en ce que** la chambre de combustion (30) est formée dans un cylindre (20) dont l'axe longitudinal (58) forme avec le plan longitudinal (29) du taille-haie (71) un angle (α) situé entre 0° et environ 45°, étant précisé que la section de l'axe longitudinal de cylindre (58) qui s'étend dans la chambre de combustion (30) est située en particulier du côté du plan longitudinal (29) du taille-haie (71) où est disposé un silencieux d'échappement (19) du moteur à combustion interne (14).

4. Taille-haie selon l'une des revendications 1 à 3,
**caractérisé en ce que** le réservoir (6) est disposé sur le côté du moteur à combustion interne (14) opposé à la poignée arrière (3).

5. Taille-haie selon l'une des revendications 1 à 4,
**caractérisé en ce que** le réservoir (6) est situé dans une zone couverte par la poignée tubulaire (4).

6. Taille-haie selon l'une des revendications 1 à 5,
**caractérisé en ce que** la poignée tubulaire (4) couvre un plan de poignée tubulaire (64) qui s'étend transversalement par rapport au plan de lame (13) et transversalement par rapport au plan longitudinal (29) du taille-haie (1, 71).

7. Taille-haie selon l'une des revendications 1 à 6,
**caractérisé en ce que** la poignée arrière (3) est située dans le plan longitudinal (29) du taille-haie (1, 71).

8. Taille-haie selon l'une des revendications 1 à 7,
**caractérisé en ce que** le taille-haie (1, 71) a un boîtier de préhension (2) sur lequel sont disposées la poignée arrière (3) et la poignée tubulaire (4).

9. Taille-haie selon la revendication 8,
**caractérisé en ce que** le taille-haie (1, 71) a une unité d'entraînement (41) qui comprend le moteur à combustion interne (14), une transmission (60) et le dispositif à lame (9) et qui est montée sur le boîtier de préhension (2) avec un amortissement des vibrations grâce à au moins un élément antivibrations (36).

10. Taille-haie selon la revendication 9,
**caractérisé en ce que** le taille-haie (1, 71) a quatre éléments antivibrations (36) par l'intermédiaire desquels l'unité d'entraînement (41) s'appuie sur le boîtier de préhension (2), étant précisé que deux éléments antivibrations (36) sont disposés dans la zone de la poignée tubulaire (4), et deux éléments antivibrations (36) sont disposés sur le côté du moteur à combustion interne (14) tourné vers la poignée arrière (3).

11. Taille-haie selon la revendication 9 ou 10,
**caractérisé en ce qu'**au moins un élément antivibrations (36) comprend deux éléments amortisseurs en forme de plaques, qu'en particulier chaque élément amortisseur a un bord intérieur (53) et un bord extérieur (54) ainsi qu'un premier côté frontal (55) et un second côté frontal (56), que chaque élément amortisseur est en relation fonctionnelle, avec un bord (54) et un côté frontal (56), avec le boîtier de préhension (2) et, avec l'autre bord (53) et l'autre côté frontal (55), avec l'unité d'entraînement (41), et que les éléments amortisseurs sont conçus en particulier comme des tampons Cellasto (49).

12. Taille-haie selon l'une des revendications 9 à 11,
**caractérisé en ce qu'**au moins un élément antivibrations (36) est disposé dans un logement (40) formé sur le boîtier de préhension (2), étant précisé en particulier qu'au moins un logement (40) forme une butée radiale (61) et deux butées axiales (62, 63) pour l'élément antivibrations (36), qui limitent le mouvement relatif de l'unité d'entraînement (41) et du boîtier de préhension (2).

13. Taille-haie selon l'une des revendications 8 à 12,
**caractérisé en ce que** le boîtier de préhension (2) comprend une coque de boîtier (28) et un couvercle de boîtier (27), étant précisé que la poignée arrière (3) et la poignée tubulaire (4) sont reliées solidement à la coque de boîtier (28), que la poignée arrière (3), en particulier, est formée au moins en partie d'une seule pièce avec la coque (28), et que le réservoir (6), en particulier, est formé au moins en partie d'une seule pièce avec la coque (28).

14. Taille-haie selon l'une des revendications 1 à 13,
**caractérisé en ce que** le taille-haie (1, 71) a un carburateur (15) qui est relié solidement au moteur à combustion interne (14), étant précisé que le taille-haie (1, 71) comprend en particulier un silencieux d'échappement (19), et que le carburateur (15) et le silencieux d'échappement (19) sont disposés sur des côtés opposés du plan longitudinal (29) du taille-haie (1, 71).
